Europäisches Patentamt

European Patent Office

Office européen des brevets

(19)

(11) Publication number: **0 087 549**
**A1**

## (12) EUROPEAN PATENT APPLICATION

(21) Application number: **82830145.7**

(22) Date of filing: **28.05.82**

(51) Int. Cl.³: **F 03 B 13/12**

(30) Priority: **02.03.82 IT 4789782**

(43) Date of publication of application:
**07.09.83 Bulletin 83/36**

(84) Designated Contracting States:
**AT BE CH DE FR GB LI NL SE**

(71) Applicant: **Zappala', Alfio**
**Via Padre Don Giovanni Coco, 6**
**I-95019 Zafferana Etnea Catania(IT)**

(72) Inventor: **Zappala', Alfio**
**Via Padre Don Giovanni Coco, 6**
**I-95019 Zafferana Etnea Catania(IT)**

(54) **Hydrostatic machine for the exploitation of tidal movements and water current dynamics.**

(57) A hydrostatic machine able to draw in a specific manner mechanic power of the kinetics of the high and low tide and of the hydrodinamic of the water courses characterized by a base cylinder gear which trasmits to the other following organs the pushing effect of a floater.

./...

EP 0 087 549 A1

Fig. 5

0087549

A DESCRIPTION OF THE INDUSTRIAL INVENTION, HAVING
AS A TITLE: "A HYDROSTATIC ENGINE FOR THE EXPLOI-
TATION OF THE HIGH AND THE LOW TIDE AND THE HYDRO
DINAMIC OF THE WATERCOURSE".

The structure of the devise and the building of
the mechanics razionality of the prototype shown,
they point out their originality for the development of the application of some of the phisics
laws, with a particular care the hydrostatic.
The mechanic complex fiondamentaly riflects appli-
que work in a rational way of a compulsory phisic
law, with particular care the hidrostatic. The inexhaustible source of energy is equiped by a na-
tural phenomenon, of the high and low tide and of
the hydrodinamic of the water courses.

The beginning of its motor action, begins from
the exploitation of the total weight of the water,
of which the note law of ARCHIMEDE.

To clarify what I am to assert, an esamination ca-
se comes out to show an easy and more exhaustive
dimostration, and so that, the utility of a water
source, such as a river, or a stream ect.

The cylinder efficiency offered by nature, due to
the transfer of the water from the fountain to
the vally, or from the high and low tide.

The natural water flowing is a cylindar energy, and with a proper trasformation system, it becamen motor functional.

To trasform the mechanic efficiancy of a water flow and obtain the strength to exploit the shaft, the difference in hight is enough in a short stretch of its course, of only a few meters.

The developable power is directly proportional to the reach of the water course to its volumetric statement in the time employed for the imminent supplies. In order to carry out the accomplishement of the prototype in exploitation of a water course, is necessary condition the availability along its course, of a long adapter which helps the building of a lake A.1 for the 50% of the water gathering of the running needed, in the time used by a special floater B.3 to end its cycle in descent.

The function of the basin A.1 is of a feeder, which consents the yielding flow to the mantainment of the constant level in the big basin A.2, of proportioned dimention to its erogation for the carry out of the installation, and replace the run off of the pressing caused by the floater B.3 in the basin A.2, during the ascent fase, conforming to decreasing of the push relation, for the beginning of the communicated vessels.

The basin A.1 described above, must be built for the laterally convenience of the water course served with a insertion mesh regolable by a shutter.

The side A.55 of the basin A.2, must be built nearly atteched to the basin A.1, in a defluent manner, to consent with facility the passing of the water through the input window A.4 of which flow in an finished ascent fase is purpously interrupted at the same shutter valve.

The basin A.2 of which we have already talked, is a basin shaped like a swimming pool, that is to say, with perimetral walls and the base pavement made of concreat. Apart from the vantage which shows the finding in itself, its razionality construction is very much presented for a numer of constructions after its first implantation of the same type, which work indipendently from one another using the same water. And at this distance to its perimiter and perpendicular in the center, framed in beams, a big prismatic plank A.6 is put, its dimention must be such to hold, together with the stand still of the supports A.56 click laterals, the weight of the floater B.3 in discendent fase.

Its wrapping as it was said befor, has the dimentions and the symetry proportioned to the basin A.2. — In its construction it must be taken on account of the structure to realise a hollow space A.7 with an equidistance to the wall of the basin A.2, of a few centimiters, to favour in the shortest time the filling and the completement of the levil which gives the go to the push. The floater B.3 is held from the sides by guide A.8 by equilibrium in uplyfting and in the decent, framed at the corners. The plank A.6 erected in the center of the base A.9 of the basin A.2, at the hight of point A.54 in which it will begin, the run of the ascent and for the duration of it, it is provided of a transverse denture A.10.

It crossed the floater from the base to the top, by means of a tubolar passage B.11 of the same size which serves also as a guide. The prismatic guideB.11 is of a tin seal, at its endings, of the high side, it is provided by a strong bridge E.16, of which covering gear E.12 of a cilinder shape, expected to put in gear with the denture A.10 on the plank. At the ascent or descent movment of the floater B.3, called gear E.12 is oblidged to flow on the denture of it E.12, effecting some round about on it self. At the two endings of the plank E.13 of the denture wheel, destined to an engine, and with which make a sole body, it takes two joined pulleys E.14-15 for each side; therefore such pulleys E.14-15, carries out as a destination the same rotation, acting in the two rotations the same service with an alterated destination for a simplier dimostration, let's take the floater B.3 shown at the three cubes superimposed A-abc. To obtain a useful running, as it was said befor, it is necessary to divide the total void as follows:
- The basic cube B-c, apart of acting as a balance to the structure, it must stow ballast to keep together with the second cube B-b a balanced immersion line, corrisponding to the emergence of the base of the third cube A-b because the total gross tonnage weight of the two cubes B-c, must evoid the equivalent to the capacity in the weight volum of water which moves the third cube B-a. -
It is ovious to prove as the levil of the water in the basin A.2 increse, the floater B-3 left alone, its floating law follows.
Otherwise, if we put to restraint the such called floater B.3, and higher the water level in the basin A.2, it prints on it the principle of Archimedes, a push from downwords to upwords equal to the displaced volum of water. As a riflex, in the flow of the tide, a craft treatment in the position of an end reflow, at the moment in which it comes to be let free from the hold at the maximum point of the flow, it recives a push from downwords to upwords, always with a decrescent power. As a movment reflex, a phisicomechanic phenomenon happens, at the moment in which the floater B.3, after having reached the decid upper point and stopped in a such position, having ended the reflow, the gravity weight of the total gross tonnage, it impresses the run of the motor gearing E.12 showing a power development with an equal intensity at the start. While the floater B.3 will dip in the basin A.2, it is thrown away from the water drain A.5, the water which it displaced for the immersion effect of its loaded wrapping of the ballast, which in the beginning was used for the support to adjust the ascendent push. The floater B.3 of the resting state to the decid, down point is ready to give a start to the ascention, but for such inertia the shutting of the shutter A.5 must come first, or the discharge valve and the conseguent opening of that of the insertion A.4.

It is to point out that the residual water level with the floater at the lower dead point must touch the low side of the delimitated base of the third cube A.a. - After the contemporal opening of the valve A.4 of the immersion, as soon as the water fullfills the level of the full of the hollow space of the immersion valve A.2, the floater B.3 is the condition to let out all its push power. The cardinal point is the total exploitation of the powerfull force which springs by hydrostatic. The floater B.3 by how it shows its push power, the exptoitation is not pratical of its strength, because of the short time which takes in the trasvers, and because of the decrescent sprint, it is not easy to translate in convinient rendering work such movment. With my device, I understood to surround the obstacle, happily exceeding the difficulty, after having sharpened my knowledge for the realization of a mechanic accumulator H.15, which has the power of possessing instantly the hold of the push power, even if its decrescent an suddenly In the paragraph befor, it has been described in a scanty way, that to translate the cinetic in potenzial mechanic in the case in examination, it was made necessary the ausiliar of the mechanisme of the cilinder E.12; which acts as an intermediant suitable for the development of an automatic action of the fixing of the floater B.3 in its movments with simile to the oscéllent pern of the scale, in so far as soon it passes the water level in the basin, it has the maximum push power provocated by the automatic loss of balance of the balance. At this point, the recover divice gets in action at the accumulater, because it has come to determinate a strong change of potenzial mechanic energy. The cilindric gear E.12, pushed by the floater B.3, will effect the flowing on the plank denture performing circular rolls on it self in relation of its circonference dimention. Such gear E.12 is built on support E.16, like a bridge as it was said, and it formes a sole body with its plank E.13, which goes further its side pin cushions E.17. Facing the extension of each side, a plate E.18 is well fixed on which are well fixed on each of them E.18-19, two big dimencions E.14/14. pulleys. It is understood, that the push which the floater B.3 little by little puts out of the basin A.2 decrese the intensity proportionatly to the report of the loss of its void in the immesion: therfore it is made necessary to operate a recove-

ry of the descent power. To advantage better the total power recovery systim, it is made necessary and only, the application of pulleys and spirals with variable pace E.14.

To give a clear dimostration, the variable pace of the pulleys consits of E.14; in the creation of the circonference in an asimetric spiral at the curvilinear at the Archimedes spiral. It is necessare to do a compleat explanation and clear its concept; As it is of a service of an equivalent

evolution of a progressive automatic change, which in this present case it changes the wing power stationery and uncontested the value of the resistence. This is possible due to the short rotation which covers the dental wheel, which it wears out nearly in only a round. For this purpous a pulley has been created which has the charateristcs of a first kind level function, while the ray decre- se consists that the fulcrum will near the resistence to light off the decrescent power, so it keeps the result with much delay and with delayed movment of the push of the floater B.3 to the re- sistence H.15.

From such concept, I took out the deductions neces sary of crativity with the ending of a happy so-

0087549

lution. The function of the four pulleys E.14 which have the iniziative to perform the wheeling of the draught at the tie rod, enveloping the relative ropes on turn, It remaines still and invariable the impressed value of the power to win the resistance of the opposition. The spiral pullery E.14 has an asimmetric circonference, with a decrescent shape to its ray, following a curve line a spiral which will have as a conjunction spot the base of the departure ray or to continue helicoidiarly if the case will require it.

The pulleys E.14-15 is held at loth ends on the plank E.13 of the motor gear E.12, performing their conformity rotation to the crauler wheel E.12.

The structure of their circonference, is the same for all four, but it is divided in two corrisponding couples, at the intent to perform, in how it was that, alternate productive rotations. Being their dispositions opposite, which help the rotation movement of the entanglement in one way or an other, the result of the decrescent push of the floater B.3 is ended at the accumulation. Every B.14-15 pylley holds fixed to the esterior cut of the maximum ray of its circonfe- rence, in a draught position, at the center of the race E.19 which serves also as a guide, of how it was intended ansipating the description, a iron rope C.20, having its lenght nearly the same as its circonference, while at ends of each of them, a dentured multilink C.21, chain will be attached. As the rotatory ihiziative of the pulleys E.14-15 is transmitted by the motor gear E.12, their movement devaid destination is addressed near the opposite side of the gorge E.19, in this way a wheeling of a tie rod traction occurs. While the robes C.20 gradualy go in their rispective gorges E.19 following the decrescent ray, it mantains a constant tension to win the resistance till the end of the rotation. The two couples of pulleys E.14-15 are put in a way that, while the couple E.14 wirids the rope C.20 with a chain C.21, the other couple extends helped by the call of the pendicular C.22,which lies at its ends.

When the motor gear E.12 begins the rotation in one way, the two pulleys E.14 opposite equidistance, divided for each side, corrisponding to the same tension ray, maintaining the exact balance to the cilinder gear E.12 because it is helped by the sen se of the shelter drive of the prismatic plank so

0087549

the two ropes C.20 which make head to each ray,
act conseguently. The two pullies E.14 while they
wrap their rispective ropes C.20, the gorge E.19
of each acts as an accommadation guide in this
way it allows a rod traction of the chains C.21,
which penetrates in the two gears corrisponding
to the quintiplette D.25, obligint them to wheel
in the wanted sense. In the same way the of the
rotation occurs the deviation of the rotation.
While the pulling action of the two ropes E.14
stops at the end of the race, the other two pul-
leys E.15 fitted in the opposite way are already
in a pulling position. The alternative movement
of the ropes, performed by the two couples of the
pulleys E.14 E.15 is different only in the fixing
of the antithesis of one in comparison to the other.
In conclusion of what we have said, the pulleys
E.14 in the decrescent circonference ray, which
forms a spiral, consents the constant power tra-
smission of the decrescent push of the floater
B.3, with a rhythm corrisponding to the action,
with the condition the, the iniziative is unicaly
devolved to the pulleys E.14-15.
In other words with the use of such pulleys E.14
it si manifested a constant and uniform delay of the power at the accumulation H.15, until reaching point zero of the race, assuming in this way the function of a progressive multiplier.

The two couples of the pulleys E.14-15 how we have already said, have alternate movements, and that is to say that while a couple reacts at the pull the other opposite couple stretches on account of the calling of the weight which loads at the pendolums C.22 attached to their ends.

The gears D.23-24 which recive the machinery action of the dentured chains to the tie rods, dragging in rotation the fifth gear D.28 centraley fixed, which make part in solid and primary to their group.

Such gear D.28 of strong proportions, with a chain drive C. or in couple, the principal gear action H.57 of the winch H.29 fixed on a sold suitable base, which has the work to drag till the top of the proper level ground H.30, fixed by a mass of ballast on flowis H.60, to easy the drag and lessen the friction of the svirament. The resistance to pass the winch H.29, must result nearly the same as the value of the push of the floater B.3.

The fifth gear D.28 of the quintiple group is compleat with approphiate blockage denterurs, to consent the rhythmic gradual push of the accumulator mass H.15.

The push of the floater B.3 can end in a very short time, in correlation to the support flow of the water of the basin. It remains there at the lower or upper dead point until the compleat level of the full or of the emptyness of the gap in the basin A.2.

This states, the floater B.3 remaines pointed on the gear E.12 dentured on the prismatic plank until it dosen't pass the bascule the strain of the push the resistance of the accumulator mass H.15, equal to the working action of a scale. The rotatory action of the cilinder gear E.12, is trasmitted with all its whole integraty, at the call of the winch H.29 which drags the level ground H.30 to the fixed point. At the time in which the opposition power becomes insufficent to the assorbiment of all the floater push power one has to multiply proportionly the report for the moving of the accumulator mass.

If my idea is not mustahen, the most suitable method of accumulation and additional consequent of the power for the repation of the action, has been chosen from a particular analisis. According

0087549

to my concinction, the thesis has been made valid in order to be able to accumulate a power of wide proportions, of which effects will end in quite a short time, it is indispensable the auxiliar of a mechanic accumulator H.15 with the capasity of immediate recovery. Such accumulator H.15 must consent the acquited power accumulent, usible then with mesured circumspection of exploitation. Infact I took as a comparable indes the balance movement of the scale, for the creation of a suitake accumulation device H.15.

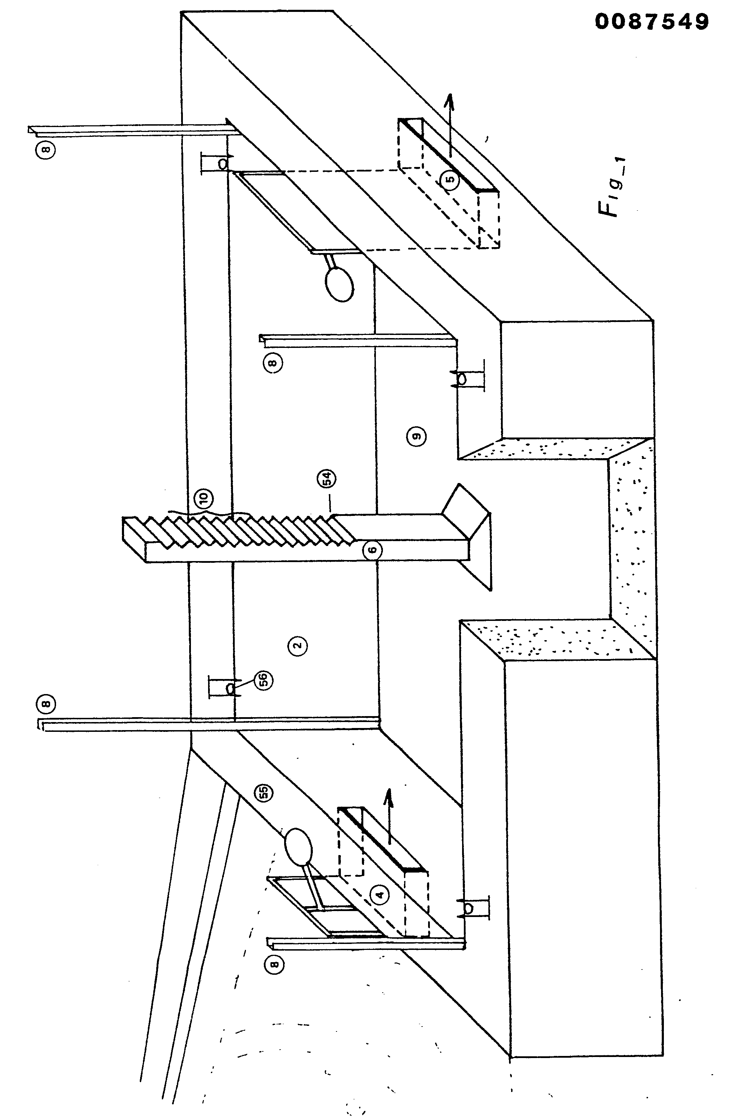

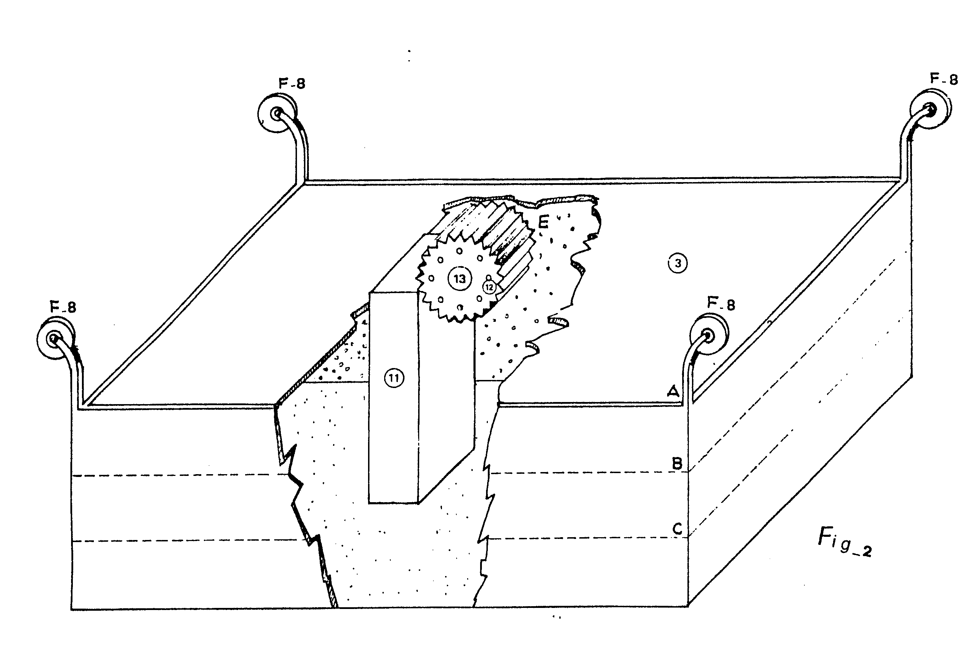

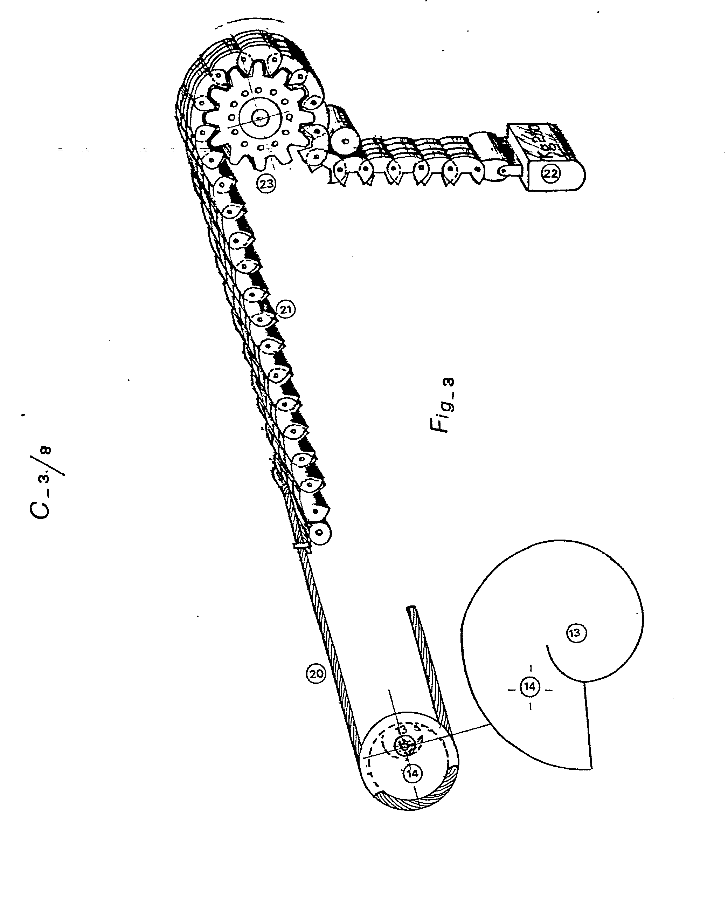

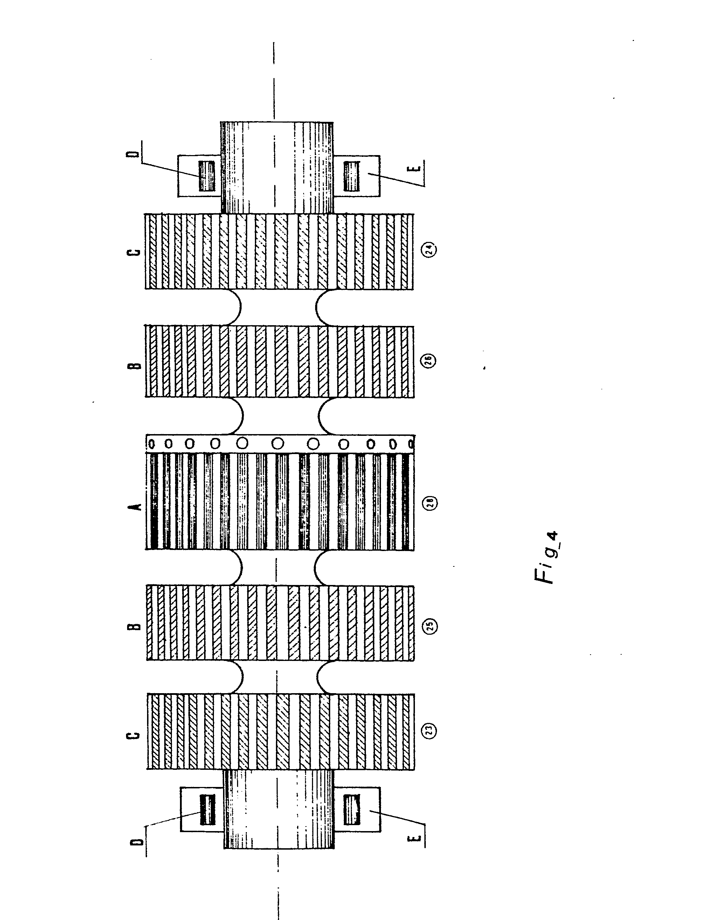

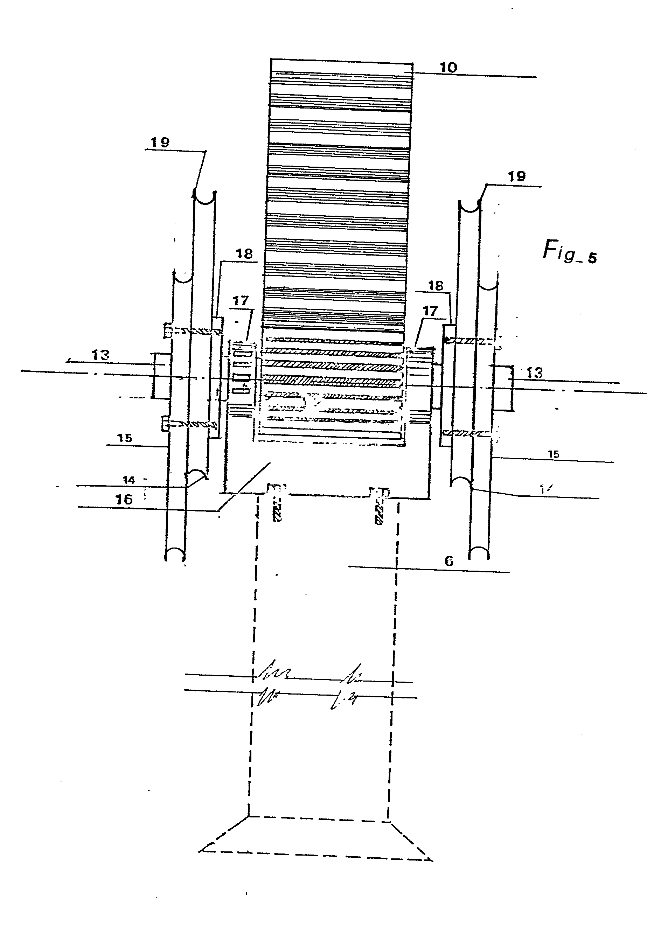

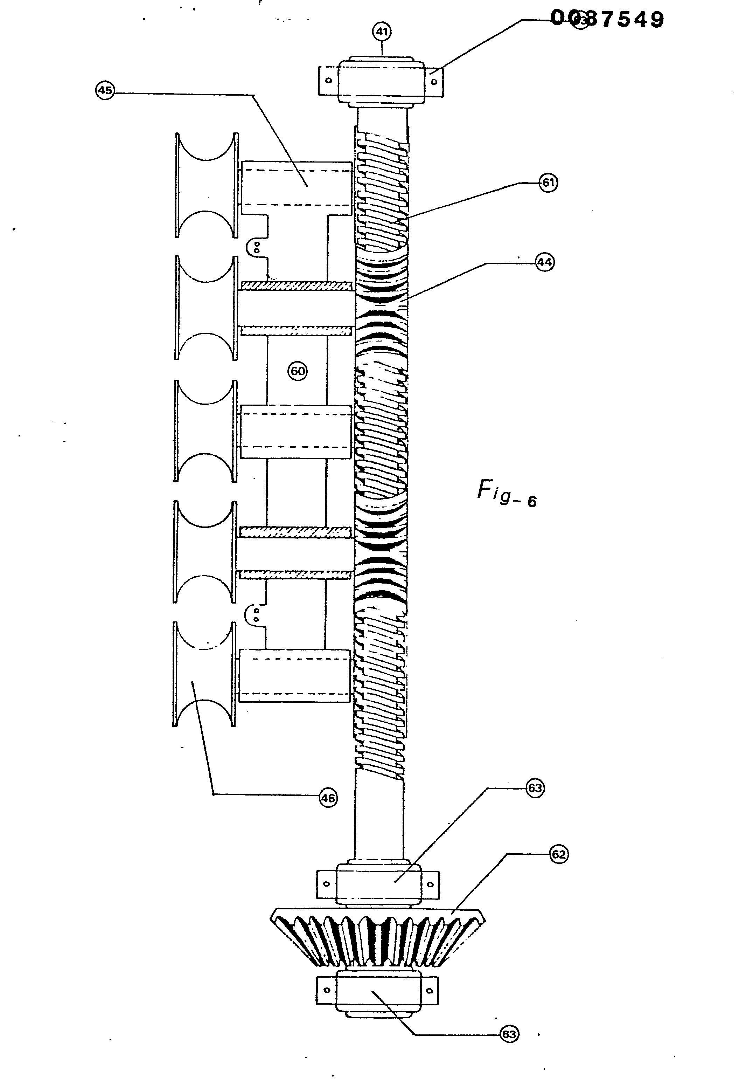

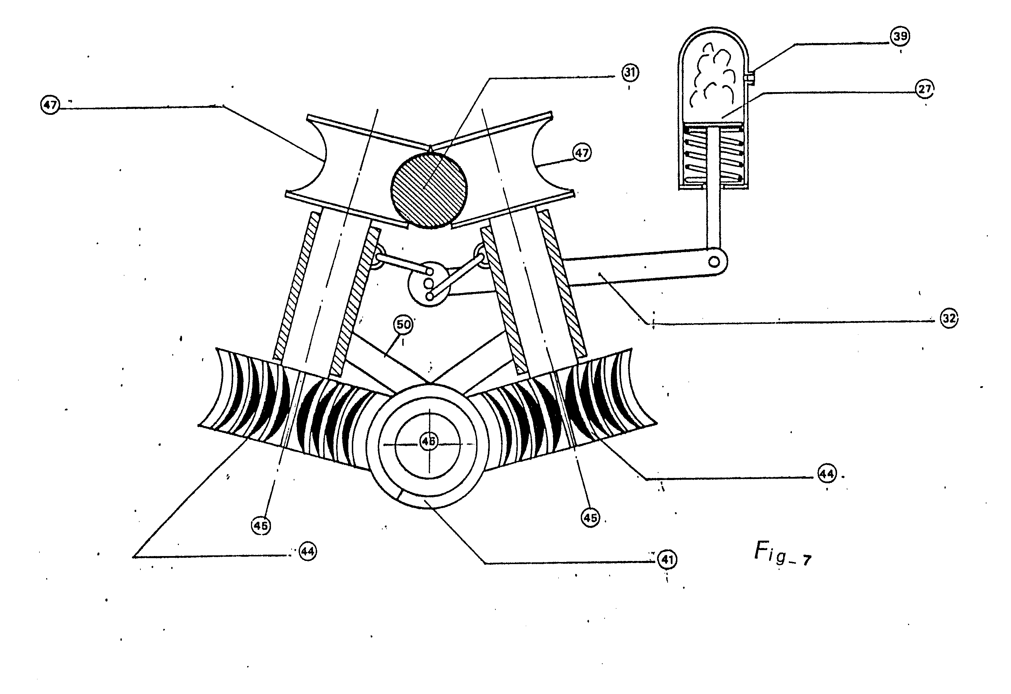

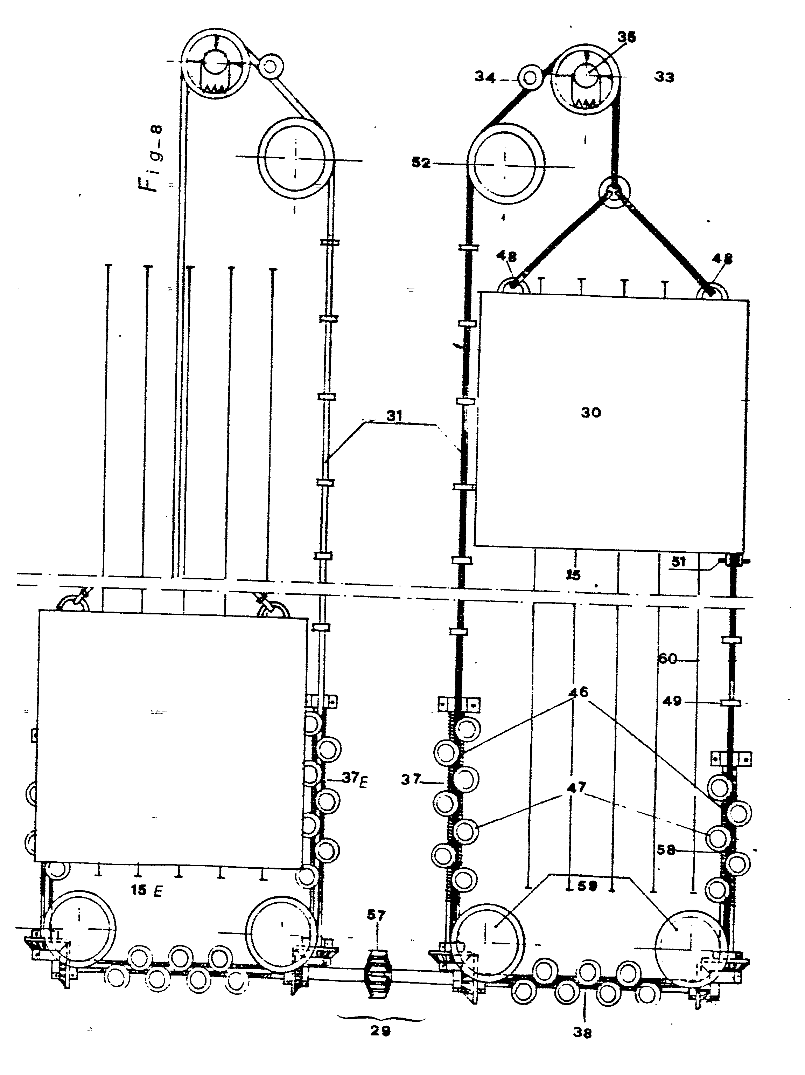

The drawing of the accumulater mass H.30 of the shoped ballast, is effected by a winch H.29 on a slanting flush with a large shope, so that, after having reached the preveley fixed distance, the towing rope H.31 will automaticaly loase it self from the vice H.47 of the winche H.29 and the level ground H.15 rimains held by the rope H.31 already enveloped to the main pulley H.33, assisted by the adiacent tentichain, so that the slope will go down along the gravity skidding, until the starting shock-absorber repellents point with convieintly controlled accelaration. In the case in which the winch H.29 will not come out suitable to the towing because of the big ballast mass H.30, a re-

-16-

couse to the adaption of the mobil pulley is ne-
cessary.

While the svirament accurs, the main pulley H.33
with its click denterurs drag the metal plate
H.35 with a binoculas clutch, impressing it motier
power to it and trasmits all the power which it
takes on, balanced, if necessary by a centrifugal
espansion. This done, only one mass certainly gives the interruption of the pruductive cycle, and
that is the ability of the coupling of another
mass at a parallelle action, with an alternative
function, commanded by the same winch H.29 at
the same time of the release of the vice of the
towing of the first wing of the winch 37, the
circuit will automaticaly close the G.40 hydraulic hold of the second wing, in this way the towing of the second mass H.15 begins with equipol-
lent development at the first wing H.37.

While at the first mass H.15 it discends the slope, the other parallelly H.15 is in an ascent
fase. In the case in which it will not render
sufficently in time, the total race for an adegua
ted pruductive exploitment, because of the scarse
capacity volumetric course of the water flow, a
recorse to abinate another installation is dome

0087549

to make consecutivly use of the same water.

The same device is used for the explatation of the tide; it is said that,the installation for -

such use is more semplificyed it its structure than that of the water corses in a particular way if they are in use on inténted coasts, near a gulf,

in other way in a place, where it resents less the influence of the billows. I did not deepened and I didn't go in the particulars of a prototype of a building character, because the thisis, till now treated in its complex of a more semplifyed twin costruction because it hasen't got any problem of imminent flood tide which helps the exploi tation at a sudden action.

The winch H.29 used for the recovery of the power, it is a special winch, above all it is suitable for the alternate towing. It has been structured with two wings H.37-37e, it is fixed the intermit tent transport of the level ground H.30, on which a mass is fixed agglomerated with ballast of concrete.

Every winch wing is costitiuted of three planks H.37-38-8 fixed to U., for all their lenght elicor dalment bordered with pace F.61 at a rectangular section on service at a multyplied tangent screw, which forms groups with dentured geared crowns G.44. The crowns G.44 are fixed on an oscillant wing G.50, having as an oscillant pin G.46 the bordered plank. Their work is to trasmit through the plank G.45 the coupleing of the crowns G.44 held by the oscellent support the rotary motion at the holding corrisponding pulleys H.47.

All the pulleys H.47 (in number 19) for the three wings, work in concomitance on the iron hope H.31, which finds place in their respective gorge. The pressure G.39 for the hydraulic seizing, opportunatly eserscised on the planks consent, the tightening of the seizing with prestabilised movement autocomanded, with the specificated intent to move the pull of the big iron rope H.31, slightly faulty to help win the resistence of the radiant friction of the towing. The burning argument for a big system of big dimantions, which covers big portions characters and one must use a sofisticatted techneque because of the effort in which it will be subjected; It is necessary to structure a tackle elaborated in its minimum particulars. Being a mechanism in which pins the developments of the precedent discussions. It was beleved to adoperate a system which disimplyes a work pract-

0087549

tamently mechanic, which consents a happy ending
of the thisis till now used. For one notion the
structure of a winch as we intended beforhand,
it will be integrated of a senoirs of accessory
organs in an instalmemt of a very big dimention.
Passed the problem of the structure, an argument
of great interest and the desplacment of the
towing rope H.31 which will assume a conveniently
simmetry in the shape of a crown. The chose of
the principle on which the unurnding of the towing
is used, has a determinate value.
The big rope H.31, of which ends ties H.48 a bi-
lanced side fixed to the level ground, goes on
to the slides H.49 at rolls on the ground, enveloping at the main pulley H.33 gorge at the ends
of the slopea tentichain is put in the pulley gor
ge H.34, than it goes on to that one of the guide
at the upper corner H.52, it is laid on the flowing rolls supplied H.49, until it reaches the
first wing of the pulling pulleys H.37 than continuing on the second H.38 and on the third wing
H.58, by means of the guide pulleys at the lower
corners favoured by the trasmition of the cornered conics gears which trasmits the movment until
the passivly join the side low part H.51 of the

0087549

ground betters the rendering of the complex in consideration to its lenght.

The intent is quite clear, it passes the problem of the tangling of a non common size of rope, as well as the duration of the same and partly determains the balance for the compensation to the loss of power for passiv frictions. Ended the rotation which the implantment needs, the svirament accurs to effect the analoge complex of the service repetition.

I intended compleating the thesis with dimostrative graphics of which on Fig. A-B-C-D-E-F-G-H- presently wholy described is clearly described of phenonim and movments to distinguish. The subjects till now used shows us congecture conclusions which reflects a very strict yoh of creativity connected to the phisic laws sometimes espositions which shows syllogism.

—/—

<u>C L A I M</u>

1) An Universal Hydrostatic Engine, for the exploitation of the high and low tide and the hydrodinamic of the water course, characterized by the big capability of the electric power.

2) An Universal Hydrostatic Engine, which like how it described above, it characterized for the instal

lation plant, in every exploitation place and condition, for its particular adaptability of the structure.

3) An Universal Hydrostatic engine able to drawn in a specific manner mechanic power of the kinetics of the high an low tide, and of the hydrodinamic of the water courses.

4) An Universal Hydrostatic engine, like as the claim befor, is caracterized by a base cylinder gear, promoter for the development of the potenzial energy, which trasmits to the other following organs, the push effect of the floater.

5) An Universal Hydrostatic engine, of which at the preceding claims, characterized by the alternate trasmisions of the power by means of four pulleys with a scroll circonference in antithesis on the same plank, which trasmit the floater fixing the power.

6) An Universal Engine, like in the above claims, characterized by automatisim at the scale model, that is to say, as soon as the level in the void of the basin is compleated, the floater disposes the maximum push power to win the resistance to the accumulation.

7) An Universal Engine, characterized by the pul-

0087549

leys with a snail circonference and snail curve-lines geometricalmently asimmetric, in a way that in their rotation at 360° conclud the progressive nearing action of the fulcrum at the resistance, while the push power decrescents from the power wing, in conseguence to the floater gradual.

8) An Universal Hydrostatic Engine, like in the claims above, characterized bu the pull winch alternated on slides.

9) An Universal Hydrostatic Engine, characterized by the pull of the pull rope of the pulleys with hydraulic tension a release power of automatisim.

10) An Universal Hydrostatic Engine, characterized by a double service pull winch with two ropes disposed in a ring, making head to the two equiponderant level ground, with alternated service.

11) An Universal Hydrostatic Engine, characterized by a head pulley at the end of the slope, which assums all the power shown by the level ground in the gravity for the svirament and it plankley trasmits it to the power hold.

All as how sostanzialmently described, and shown for the specific purpose.

Rome, 19th april 1982

Fig_1

0087549

Fig_2

Fig_3

Fig_4

E -5/8

0087549

Fig. 5

$F_{ig-6}$

0087549

Fig_7

0087549

Fig_8

European Patent
Office

**0087549**
Application number

**EUROPEAN SEARCH REPORT**

EP 82 83 0145

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 259 250 (REID) <br><br> *Page 5, line 34 - page 12, line 35* | 1,2,3, 6,7,9 | F 03 B 13/12 |
| A | US-A-3 959 663 (RUSBY) <br><br> *Column 1, line 65 - column 3, line 54* | 1,2,3, 4,6,9 | |
| A | GB-A-1 262 261 (HITCHINS) <br><br> *Page 1, line 72 - page 3, line 3* | 1,2,3, 4,6,9, 10 | |

TECHNICAL FIELDS SEARCHED (Int. Cl. ³)

F 03 B

The present search report has been drawn up for all claims

| Place of search | Date of completion of the search | Examiner |
|---|---|---|
| THE HAGUE | 13-06-1983 | DE WINTER P.E.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82